# FASCICULE DE BREVET EUROPEEN

(11) **EP 1 238 007 B1**
(45) Date de publication et mention de la délivrance du brevet: **15.10.2003**
(21) Numéro de dépôt: 00977631.1
(22) Date de dépôt: 08.11.2000
(51) Int. Cl.: C08K 13/02, C08K 3/22, C08K 3/34, C08L 83/04, H01B 3/46

(54) **COMPOSITIONS POLYORGANOSILOXANES VULCANISABLES A CHAUD UTILISABLES NOTAMMENT POUR LA FABRICATION DE FILS OU CABLES ELECTRIQUES**
HITZEHÄRTBARE POLYSILOXANZUSAMMENSETZUNGEN , INSBESONDERE ZUR HERSTELLUNG VON ELEKTRISCHEN DRÄHTEN UND KABELN
POLYORGANOSILOXANE COMPOSITIONS VULCANISABLE BY HOT PROCESS USEFUL IN PARTICULAR FOR MAKING ELECTRIC WIRES OR CABLES

(30) Priorité: 09.11.1999 FR 9914316
(43) Date de publication de la demande: 11.09.2002
(73) Titulaire: RHODIA CHIMIE, 92408 Courbevoie Cédex (FR)
(72) Inventeur: BRANLARD, Paul, F-69005 Lyon (FR); GEORGE, Catherine, F-69130 Ecully (FR); LEUCI, Christine, F-69008 Lyon (FR)
(74) Mandataire: Trolliet, Maurice
(86) Numéro de dépôt international: FR0003106
(87) Numéro de publication internationale: WO01034696

(56) Documents cités:
- EP-A- 0 051 212
- EP-A- 0 467 800
- FR-A- 2 396 788
- US-A- 3 996 188
- PATENT ABSTRACTS OF JAPAN vol. 1996, no. 09, 30 septembre 1996 (1996-09-30) & JP 08 127716 A (SHIN ETSU CHEM CO LTD), 21 mai 1996 (1996-05-21)
- PATENT ABSTRACTS OF JAPAN vol. 1997, no. 05, 30 mai 1997 (1997-05-30) & JP 09 012888 A (SHIN ETSU POLYMER CO LTD), 14 janvier 1997 (1997-01-14)

## Description

La présente invention concerne des compositions polyorganosiloxanes vulcanisables à chaud en élastomères silicones, c'est-à-dire vulcanisables à des températures de la matière généralement comprises entre 100° et 200°C et pouvant au besoin aller jusqu'à 250°C. L'invention concerne encore l'utilisation de ces compositions pour notamment la réalisation des enveloppes ou isolants primaires entrant dans la constitution de fils ou câbles électriques protégés contre l'incendie. L'invention concerne enfin les fils ou câbles électriques protégés contre l'incendie qui sont fabriqués moyennant l'utilisation de pareilles compositions.

Par l'expression "fils ou câbles électriques protégés contre l'incendie", on entend définir des fils ou câbles électriques qui doivent garantir un comportement au feu de haute qualité en termes, au moins, de cohésion des cendres. Les caractéristiques que doivent présenter les fils ou câbles électriques protégés contre l'incendie, font l'objet de réglementations légales dans de nombreux pays et des normalisations rigoureuses ont été établies.

En France, par exemple, une norme importante relative aux essais de tenue au feu des câbles électriques, qu'il convient de satisfaire, est la norme NF C 32-070 CR1 qui concerne la durée de fonctionnement des câbles brûlant dans des conditions définies. La résistance au feu est à mettre sur le compte de la production de cendres qui doivent présenter une certaine cohésion permettant de conserver un isolement suffisant pour le fonctionnement des câbles. Dans cet essai, les échantillons de câbles sont placés dans un four dont la température atteint 920°C en 50 minutes et cette température est maintenue ensuite pendant 15 minutes ; durant cet essai, les câbles sont soumis à des chocs réguliers; l'essai est satisfaisant si des lampes témoins, branchées sur les câbles alimentés à une tension nominale, ne sont pas éteintes à la fin de la durée de l'essai (c'est-à-dire au bout de 65 minutes).

La norme précitée ne peut être satisfaite que pour des fils ou câbles électriques dont au moins les matériaux isolants primaires ont été particulièrement étudiés vis-à-vis de leur non-propagation de l'incendie. En pratique, selon la technique antérieure connue, il a été constaté que les matériaux primaires isolants à base d'élastomères silicones obtenus par vulcanisation à chaud de compositions polyorganosiloxanes appropriées, peuvent satisfaire aux essais de non-propagation de la flamme. Lorsque l'élastomère silicone brûle, il se transforme en une substance cendreuse à base de silice, isolante et ayant une certaine cohésion. Toutefois, pareilles compositions proposées jusqu'ici ne sont pas totalement satisfaisantes et nécessitent encore des améliorations pour notamment obtenir des cendres plus cohésives, ce qui conduira en cas d'incendie à des temps plus longs de fonctionnement des câbles.

Un câble électrique est constitué, selon la technique antérieure connue, d'un ou plusieurs monoconducteur(s) (en général à base de Cu ou d'Al); chacun de ces monoconducteurs est protégé par une envoloppe ou isolant primaire fait d'une ou plusieurs couche(s) concentrique(s) à base d'élastomère silicone. Autour de cette enveloppe ou de ces enveloppes (dans le cas d'un câble à plusieurs monoconducteurs) est (sont) prévu(s) un ou plusieurs élément(s) de remplissage et/ou un ou plusieurs élément(s) de renfort à base notamment de fibres de verre et/ou de fibres minérales. Puis on procède ensuite au gainage extérieur pouvant comprendre une ou plusieurs gaine(s). Dans le cas d'un câble électrique à plusieurs monoconducteurs, le (ou les) élément(s) de remplissage et/ou le (ou les) élément(s) de renfort, qui est (sont) disposé(s) autour des monoconducteurs (équipés chacun de son isolant primaire), constitue(nt) une enveloppe commune à l'ensemble des monoconducteurs. Bien que l'élastomère silicone entrant dans la constitution des câbles soit essentiellement le matériau constitutif du (ou des) isolant(s) primaire(s), il peut être présent aussi, en proportions variables : dans le (ou les) élément(s) de remplissage et/ou dans le (ou les) élément(s) de renfort (constituant l'enveloppe commune dans le cas d'un câble à plusieurs monoconducteurs); et/ou dans la (ou les) gaine(s) extérieure(s).

Le nombre de couche(s) concentrique(s) à base d'élastomère silicone, constituant l'enveloppe ou isolant primaire de chaque monoconducteur, et l'épaisseur de paroi de chaque couche vont dépendre essentiellement des exigences imposées pour le maintien du fonctionnement selon les dispositions des normes et en particulier de la norme NFC 32-070 CR1. De manière générale, il est souhaitable d'obtenir un pareil fonctionnement moyennant l'utilisation d'une ou de deux couches ayant chacune, de façon appropriée, une épaisseur égale à au moins 0,6 mm et, de préférence, à au moins 0,8 mm.

Un but de la présente invention est donc la mise au point de compositions polyorganosiloxanes vulcanisables à chaud en élastomères silicones qui soient capables, déjà quand elles sont utilisées pour la seule réalisation de l'isolant primaire, de conférer aux fils et câbles électriques un comportement au feu de haute qualité marqué, au moins, par la réalisation d'une amélioration de la cohésion des cendres permettant, pour toutes les compositions selon l'invention, de satisfaire à la norme NF C 32-070 CR1 sous 500 volts en allongeant de plus de 30 % le temps de fonctionnement des fils ou câbles par rapport au seuil de 65 minutes requis par la norme.

Un autre but de la présente invention est aussi la mise au point de compositions polyorganosiloxanes vulcanisables à chaud qui, tout en possédant une tenue améliorée à la combustion, possèdent simultanément de bonnes propriétés mécaniques à l'état non recuit comme à l'état recuit et, en particulier, après un vieillissement de 10 jours à 200°C opéré selon la norme CEI 2 (en matières notamment : de dureté SHORE A, de résistance à la rupture, d'allongement à la rupture, de module élastique).

Dans l'état antérieur de la technique, on décrit des compositions polyorganosiloxanes vulcanisables à chaud en élastomères silicones où on fait appel, à côté d'un polymère polyorganosiloxane réticulant par une catalyse au pèroxyde, à des charges de type fondant et/ou de type lamellaire qui peuvent être associées ou non à du platine et à des oxydes métalliques afin de donner naissance, dans le cas d'un incendie, à la formation d'une substance cendreuse isolante et ayant une certaine cohésion, permettant d'allonger le temps de fonctionnement des câbles qui sont en train de brûler. On citera en particulier le document EP-A-0 467 800 qui propose l'utilisation à la fois de ZnO (à tire de fondant) et de mica (à titre de charge lamellaire), associée éventuellement à un composé du platine et/ou des oxydes métalliques comme par exemple l'oxyde de titane et l'oxyde Fe₃O₄. Il a été constaté que les compositions et les élastomères silicones réticulés par une catalyse au pèroxyde de dichloro-2,4 benzoyle, qui découlent de l'enseignement de ce document EP permettent, pour certains d'entre eux, de passer la norme NF C 32-070 CR1 sous 500 volts, mais avec un temps de fonctionnement qui plafonne à 79 minutes, soit un allongement du temps de fonctionnement insuffisant : il est au plus égal à 21,5 % par rapport au seuil de 65 minutes requis par la norme.

Il a maintenant été trouvé, et c'est ce qui constitue le premier objet de la présente invention, des compositions polyorganosiloxanes vulcanisables à chaud en élastomères silicones, utilisables notamment dans le domaine de la fabrication de fils ou câbles électriques ayant un comportement au feu amélioré par rapport à ce qui se passe en mettant en oeuvre l'enseignement de l'art antérieur, avec comme objectif celui de procéder au moins à la réalisation des améliorations expliquées ci-avant touchant à la cohésion des cendres.

Plus précisément, la présente invention, prise dans son premier objet, concerne des compositions contenant (toutes les parties sont données en poids) :
- 100 parties d'un ingrédient a) consistant dans au moins un polymère polyorganosiloxane,
- 5 à 80 parties d'un ingrédient b) consistant dans au moins une charge de renforcement,
- 0,2 à 8 parties d'un ingrédient c) consistant dans un pèroxyde organique,
- 8 à 30 parties d'un ingrédient d) consistant dans du mica,
- 6 à 20 parties d'un ingrédient e) consistant dans de l'oxyde de zinc,
- 0 à 15 parties d'un ingrédient f) consistant dans au moins un additif habituellement utilisé dans le domaine des compositions polyorganosiloxanes vulcanisables à chaud,
lesdites compositions étant caractérisées en ce qu'elles contiennent en plus, à titre d'autres ingrédients obligatoires :
- 0,0010 à 0,02 partie d'un ingrédient g) consistant dans du platine, un composé du platine et/ou un complexe du platine,
- 2 à 10 parties d'un ingrédient h) consistant dans de l'oxyde de titane, et
- 50 à 120 parties d'un ingrédient i) consistant dans au moins une charge de bourrage.

Ainsi la Demanderesse a découvert que l'association :
- d'au moins une charge de bourrage i) utilisée à raison d'au moins 50 parties dudit ingrédient pour 100 parties de polymère(s) a), avec
- les ingrédients minéraux conformes à l'enseignement du EP-A-0 467 800 constitués de mica, d'oxyde de zinc, de platine (ou d'un composé ou d'un complexe en contenant) et d'oxyde de titane (ces deux derniers ingrédients étant utilisés maintenant à titre obligatoire et non plus à titre optionnel, comme c'était le cas dans cet art antérieur),
conduit à une action notable de renforcement dans l'élastomère fini, qui permet d'obtenir notamment dans l'application fils ou câbles électriques, une cohésion des cendres améliorée selon les explications données ci-avant.

Ainsi les compositions selon la présente invention comprennent au moins un polymère polyorganosiloxane a) contenant de 0 à 4 %, de préférence de 0,01 à 3 %, en poids, de groupement vinylé. Lorsque ces polymères polyorganosiloxanes a) ont des viscosités à 25°C comprises entre 50.000 et 1.000.000 mPa.s, elles sont appelées huiles, mais leur viscosité peut être supérieure à 1.000.000 mPa.s et elles sont appelées alors des gommes. Dans les compositions selon la présente invention, les polymères polyorganosiloxanes peuvent être des huiles ou des gommes ou des mélanges. Ces polymères polyorganosiloxanes sont des polymères linéaires, dont la chaîne diorganopolysiloxanique est constituée essentiellement de motifs de formule R₂SiO. Cette chaîne est bloquée à chaque extrémité par un motif de formule R₃Si_{0,5} et/ou un radical de formule OR'. Dans ces formules :
- les symboles R, identiques ou différents, représentent des radicaux hydrocarbonés monovalents tels que des radicaux alkyles, par exemple, méthyle, éthyle, propyle,
- octyle, octadécyle, etc..., des radicaux aryle, par exemple phényle, tolyle, xylyle, etc..., des radicaux aralkyle tels que benzyle, phényléthyle, etc ..., des radicaux cycloalkyle et cycloalkényle tels que des radicaux cyclohexyle, cycloheptyle, cyclohexényle, etc..., des radicaux alkényle, par exemple des radicaux vinyle, allyle, etc..., des radicaux alkaryle, des radicaux cyanoalkyle tels qu'un radical cyanoéthyle, etc ..., des radicaux halogénoalkyle, halogénoalkényle et halogénoaryle, tels que des radicaux chlorométhyle trifluoro-3,3,3 propyle, chlorophényle, dibromophényle, trifluorométhylphényle,
- le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyle. La présence, le long de la chaîne diorganopolysiloxanique, de faibles quantités de motifs autres que R₂SiO, par exemple de motifs de formule RSiO_{1,5} et/ou SiO₂ n'est cependant pas exclue dans la proportion d'au plus 2 % (ces % exprimant le nombre des motifs T et/ou Q pour 100 atomes de silicium).

A titre d'exemples concrets de motifs de formules R₂SiO et R₃SiO_{0,5} et de radicaux de formule OR', peuvent être cités ceux de formules :
(CH₃)₂SiO, CH₃(CH₂=CH)SiO, CH₃(C₆H₅)SiO, (C₆H₅)₂SiO,
CH₃(C₂H₅)SiO, (CH₃CH₂CH₂) CH₃SiO, CH₃(n.C₃H₇)SiO,
(CH₃)₃SiO_{0,5}, (CH₃)₂(CH₂=CH)SiO_{0,5}, CH₃(C₆H₅)₂SiO_{0,5},
CH₃(C₆H₅) (CH₂=CH)SiO_{0,5},
OH, -OCH₃, -OC₂H₅, -O-n. C₃H₇, -O-iso.C₃H₇, -O-n.C₄H₉,
- OCH₂CH₂OCH₃.

Ces huiles et gommes sont commercialisées par les fabricants de silicone ou peuvent être fabriquées en opérant selon des techniques déjà connues.

La charge de renforcement b) consiste dans la silice, l'alumine ou un mélange de ces espèces. A titre de silice utilisable, on vise des charges caractérisées par une fine taille de particules souvent inférieure ou égale à 0,1 µm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être préparées par voie pyrogénique (silices dites de combustion ou de fumée) ou par des procédés humides (silices précipitées) et peuvent être traitées ou non traitées par des composés organosiliciques habituellement utilisées pour cet usage. La nature chimique et le procédé de préparation ne sont pas importants aux fins de la présente invention, pourvu que la silice soit capable d'exercer une action de renforcement dans l'élastomère fini. Bien entendu on peut utiliser aussi des coupages de différentes silices. A titre d'alumine de renforcement utilisable, on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKUWSKI. De préférence, la charge de renforcement utilisée est une silice de combustion, prise seule ou en mélange avec de l'alumine.

Le pèroxyde organique constituant l'ingrédient c) peut être n'importe lequel de ceux qui agissent comme agents vulcanisants envers les compositions formatrices d'élastomères de silicones. Il peut ainsi s'agir de l'un quelconque des pèroxydes ou peresters qu'il est connu d'employer avec les élastomères de silicone, par exemple le pèroxyde de ditertiobutyle, le pèroxyde de benzoyle, le peracètate de tertiobutyle, le pèroxyde de dicumyle, le 2,5-diperbenzoate de 2,5-diméthylhexane et le bis(t-butylpèroxy)-2,5 diméthyl-2,5 hexane. Le choix du pèroxyde dépendra en pratique du procédé employé pour durcir l'élastomère. Pour la plupart des applications, en particulier lorsque l'isolant est appliqué par extrusion comme c'est le cas dans la fabrication de câbles ou de fils électriques, on utilisera un pèroxyde qui est actif en l'absence de pression exercée, par exemple le pèroxyde de monochlorobenzoyle ou le pèroxyde de 2-4 dichlorobenzoyle.

Le mica qui constitue l'ingrédient d) des compositions de la présente invention peut être de type muscovite ou de type phlogopite et la grosseur des particules de mica n'est pas spécialement critique, pourvu qu'elle soit suffisamment petite pour permettre une dispersion uniforme dans les ingrédients de la composition. Le mica est apporté de préférence sous forme de mica pulvérisé ou de fairine de mica ayant des particules de dimension inférieure à 100 µm.

L'oxyde de zinc qui constitue l'ingrédient e) des compositions selon la présente invention est une poudre blanche ou légèrement jaunâtre.

Le platine, ingrédient g), peut être : sous forme de platine métallique (élémentaire) ; ou sous forme notamment d'acide chloroplatinique (par exemple l'acide hexachloroplatinique H₂PtCl₆) ; ou sous forme de complexes du platine et de produits organiques : comme notamment les complexes du platine et d'organosiloxanes vinylés (par exemple le complexe de Karstedt), les complexes tels que ceux de formule (PtCl₂, oléfine)₂ et H(PtCl₃, oléfine) où l'oléfine représente l'éthylène, le propylène, le butylène, le cyclohexène ou le styrène, les complexes de chlorure de platine et de cyclopropane.

L'oxyde de titane h) est une poudre blanche.

La charge de bourrage i) est le plus généralement une silice cristalline. Pareille charge présente souvent une taille de particules supérieure à 0,1 µm. Ces charges i) sont représentées plus spécialement par le quartz broyé et les silices de diatomées. Bien entendu, on peut utiliser aussi des coupages de différentes silices cristallines. De préférence, la charge de bourrage i) est du quartz broyé.

En plus des ingrédients obligatoires a), b), c), d), e), g), h), et i) spécifiés ci-avant, les compositions selon la présente invention peuvent contenir éventuellement en outre un ou plusieurs additif(s) auxilliaire(s) f) tel(s) que notamment : au moins un produit dit "antistructure" f1) ; et/ou au moins une résine polysiloxane f2) ; et/ou au moins un agent de stabilisation f3) ; et/ou au moins un agent de couplage f4) ; et/ou au moins un pigment f5) pour fabriquer des fils et des câbles colorés ; et/ou au moins un composé à base de bore f6).

Conformément à une disposition préférée de l'invention, on vise des compositions vulcanisables à chaud en élastomères silicones qui contiennent, sur la base de 100 parties en poids de polymère(s) polyorganosiloxane(s) a) :
- de 20 à 40 parties de charge(s) de renforcement b),
- de 1 à 6 parties de pèroxyde organique c),
- de 10 à 20 parties de mica d),
- de 7 à 12 parties d'oxyde de zinc e),
- de 4 à 12 parties d'additif(s) auxilliaire(s) f),
- de 0,0015 à 0,015 parties d'ingrédient g) exprimé en poids de platine métal (élémentaire) (soit 15 ppm à 150 ppm),
- de 3 à 6 parties d'oxyde de titane h), et
- de 80 à 110 parties de charge(s) de bourrage i).

Selon une autre présentation où les quantités des divers ingrédients sont exprimées cette fois en % en poids par rapport au poids total des compositions, les compositions "préférées" de l'invention contiennent (la somme des ingrédients devant être égale dans chaque cas à 100 % en poids) :
- polyorganosiloxane(s) a) : 30 à 40 %,
- charge(s) de renforcement b) : 6 à 16 %,
- péroxyde organique c) : 0,3 à 2,4 %,
- mica d) : 3 à 8 %,
- oxyde de zinc e) : 2,4 à 4,8 %,
- additif(s) auxilliaire(s) f) : 1,2 à 4,8 %,
- platine métal g) : 0,00045 à 0,006 %,
- oxyde de titane h) : 0,9 à 2,4 %.
- charge(s) de bourrage i) : 24 à 44 %.

Pour en revenir à (aux) additif(s) auxilliaire(s) f), quand on en utilise un ou plusieurs, il(s) est(sont) représenté(s) plus précisément par [pour 100 parties en poids de polymère(s) polyorganosiloxane(s) a)] :
- 0,1 à 15 parties en poids d'un produit dit "antistructure" f1) à base d'huile(s) polydiméthylsiloxane(s) de viscosité comprise entre 10 et 3000 mPa.s à 25°C et bloquée(s) à chaque extrémité de chaîne par des groupements hydroxy et/ou d'huile(s) poly(méthylvinyl)siloxane de viscosité comprise entre 10 et 1000 mPa.s à 25°C et bloquée(s) à chaque extrémité de chaîne par des groupements hydroxy ; et/ou
- 0,1 à 5 parties de résine(s) polysiloxane(s) f2) représentée(s) par : des résines dites MQ comprenant essentiellement des unités R²₃SiO_{0,5} et SiO₂ dans lesquelles R² représente des groupements hydrocarbonés monovalents éventuellement halogénés ayant moins de 7 atomes de carbone, le rapport pondéral R²₃SiO_{0,5} sur SiO₂ étant compris entre 0,5/1 et 1/2/1 ; des résines M'Q comprenant essentiellement des unités HR²₂SiO_{0,5} et SiO₂ dans lesquelles R² a la signification donnée ci-dessus, le rapport pondéral HR²₂SiO_{0,5} sur SiO₂ étant compris entre 0,5/1 et 10/1 ; et/ou
- 0,01 à 4 parties d'agent(s) de stabilisation f3) tels que notamment : un sel métallique d'acide organique, comme un sel de fer ou de cérium, par exemple l'octoate de fer ou de cérium (proportions allant plus spécifiquement de 0,01 à 0,06 partie) ; un oxyde de cérium, un hydroxyde de cérium, un oxyde de fer (proportions allant plus spécifiquement de 0,1 à 4 parties) ; l'oxyde CaO, l'oxyde MgO (proportions allant plus spécifiquement de 0,01 à 0,4 parties ; et/ou
- 0,01 à 2 parties d'agent(s) de couplage f4) à base de méthacryloxyalkyltrialkoxysilane et/ou d'acryloxyalkyltrialkoxysilane, où la partie alkyle possède 1 à 3 atomes de carbone ; et/ou
- 0,01 à 5 parties de pigment(s) coloré(s) f5) ; et/ou
- 0,01 à 3 parties de composé(s) f6) à base de bore, comme l'acide borique et ses dérivés, par exemple du type ester d'alkyle ayant de 1 à 3 atomes de carbone ;
- la quantité totale d'additif(s), quand on en utilise un ou plusieurs, devant être égale :
   à 15 parties en poids dans le cas des compositions décrites de manière générique ;
   et à 12 parties dans le cas des compositions dites "préférées".

Pour la préparation des compositions selon l'invention, les divers ingrédients sont intimement mélangés au moyen des dispositifs bien connus dans l'industrie des élastomères silicones, l'ordre d'incorportation pouvant être quelconque. Il est toutefois avantageux de disperser dans un premier temps, dans le (ou les) polyorganosiloxane(s) a), dans l'ordre par exemple donné ci-après, les ingrédients constitutifs : possible(s) additif(s) f3) et f6), puis charge(s) de bourrage i), puis mica d), puis oxyde de zinc e), puis ingrédient g) à base de Pt, puis oxyde de titane h), puis possible(s) additif(s) f1), f2) et f4), puis charge(s) de renforcement b) en plusieurs fois; à ce mélange on ajoute ensuite la quantité désirée de catalyseur c) et le possible additif f5).

En outre l'invention, dans un second objet, porte sur l'utilisation des compositions polyorganosiloxanes qui viennent d'être décrites pour la réalisation, notamment, des enveloppes ou isolants primaires des monoconducteurs entrant dans la constitution des fils ou câbles électriques protégés contre l'incendie.

L'invention, dans un troisième objet, porte sur les fils ou câbles électriques qui sont fabriqués moyennant l'utilisation des compositions polyorganosiloxanes selon le premier objet de l'invention.

Dans le cadre de pareille utilisation, le dépôt d'une composition selon l'invention autour de chaque monoconducteur peut s'effectuer selon les procédés usuels, notamment par des procédés d'extrusion. Le dépôt ainsi obtenu est ensuite réticulé par chauffage pour conduire à la formation de l'isolant primaire en élastomère silicone. La durée du chauffage varie évidemment avec la température de la matière et la pression éventuelle de travail. Elle est généralement de l'ordre de quelques à plusieurs minutes vers 100°C - 120°C et de quelques secondes vers 180°C - 200°C. Il est possible de déposer plusieurs couches conjointement à l'aide d'une extrusion en tandem équipée par exemple d'une tête d'équerre ou d'une co-extrusion.

On va expliquer la présente invention de façon plus détaillée à l'aide des exemples indiqués ci-après.

### EXEMPLE et EXEMPLE COMPARATIF :

### Composition selon l'invention (toutes les parties sont données en poids) :

### 1.1 - Préparation :

Dans un pétrin malaxeur à bras en Z, on mélange pendant 2 heures à température ambiante (23°C) :
- 33,3 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 66,7 parties d'un polyorganosiloxane a) qui est un polydiméthylsiloxane bloqué à chacune de ses deux extrémités par un motif diméthylvinylsiloxy, contenant 120 ppm de groupes Vi ayant une viscosité de 20 millions de mPa.s à 25°C ;
- 0,28 parties d'oxyde de calcium f3) ;
- 0,05 parties d'octoate de fer f3) ;
- 2,94 parties de Ce(OH)₄ f3) ;
- 105,6 parties de quartz broyé i), commercialisé par la Société SIFRACO (Paris, France) sous la dénomination E600 ;
- 17,50 parties de mica de type muscovite d) ;
- 9,72 parties d'oxyde zinc e) ;
- 0,0056 parties de platine métal g), apporté sous la forme d'une solution dans le divinyltétraméthyldisiloxane d'un complexe du platine à 10 % en poids de platine ligandé par du divinyltétraméthyldisiloxane (complexe de Karstedt) ;
- 4,44 parties de TiO₂ de combustion h) ;
- 2,92 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 1,83 parties d'une huile d'huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 18,61 parties de silice de combustion traitée D4 (octaméthylcyclotétrasiloxane) b) de surface spécifique de 200 m²/g ;
- 11,94 parties de silice de combustion b) de surface spécifique de 150 m²/g.

Le mélange obtenu ci-avant est alors travaillé sur un malaxeur à 2 cylindres et on lui ajoute :
- 3,47 parties de pèroxyde de 2,4-dichlorobenzoyle c).

### 1.2.- Caractérisation de la composition :

(i) Une fraction de la masse homogène obtenue sur le malaxeur est utilisée pour mesurer les propriétés mécaniques de l'élastomère silicone résultant de la vulcanisation à chaud de la composition polyorganosiloxane. Pour ce faire, la fraction de masse homogène retenue à cet effet est alors vulcanisée pendant 8 minutes à 115°C, en opérant dans un moule approprié permettant d'obtenir des plaques de 2 mm d'épaisseur. On obtient ainsi des plaques à l'état non recuit (NR). On soumet ensuite une fraction des plaques à un recuit ou vieillissement ( R) de 10 jours à 200°C. On prélève ensuite dans l'ensemble de ces plaques des échantillons normalisés et mesure les propriétés suivantes :
   - dureté Shore A (DSA) selon la norme DIN 53505,
   - résistance à la rupture (R/R) en MPa selon la norme AFNOR NF T 46002,
   - allongement à la rupture (A/R) en % selon la norme précédente,
   - module élastique (ME) à 100 % en MPa selon la norme précédente.
   On mesure encore la densité de l'élastomère silicone à l'état NR en opérant selon les indications de la norme AFNOR NF T 46030.
(2i) Une autre fraction de la masse homogène obtenue sur le malaxeur est découpée sous forme de bandes qui vont alimenter l'extrudeuse mise en oeuvre pour la fabrication d'un câble électrique. La fabrication du câble est une construction standard consistant à réaliser un câble de 2,8 mm de diamètre comprenant un monoconducteur en cuivre de 1,05 mm de diamètre, autour duquel est installé une enveloppe ou isolant primaire en élastomère silicone ayant une épaisseur de 0,875 mm, qui est obtenu en soumettant le monoconducteur revêtu de la composition polyorganosiloxane homogène précitée à une vulcanisation opérée dans un four à air chaud, à une température de l'ordre de 250°C (procurant une température matière de l'ordre de 130°C - 140°C), pendant 46 secondes. On prélève ensuite sur le câble des échantillons normalisés et mesure la cohésion des cendres sous 500 volts selon la norme NF C 32-070 CR1.

Les résultats obtenus sont reportés sur le tableau qui apparaît ci-après.

### 2. Composition de l'exemple comparatif :

### 2.1. Préparation :

Dans un pétrin malaxeur à bras en Z, on mélange pendant 2 heures à température ambiante (23°C) :
- 45,4 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
- 50,9 parties d'un polyorganosiloxane a) qui est un poly(diméthyl)(méthylvinyl)-siloxane bloqué à chacune de ses deux extrémités par un motif diméthylvinylsiloxy, contenant, en bouts de chaîne, 120 ppm de groupes Vi et, dans la chaîne, 450 ppm de groupes Vi, ayant une viscosité de 20 millions de mPa.s à 25°C ;
- 3,7 parties d'un polyorganosiloxane a) qui est un polydiméthylsiloxane bloqué à chacune de ses deux extrémités par un motif diméthylvinylsiloxy, contenant 120 ppm de groupes Vi, ayant une viscosité de 20 millions de mPa.s à 25 °C;
- 0,15 parties d'oxyde de calcium f3) ;
- 0,05 parties d'octoate de fer f3) ;
- 2,72 parties de Ce(OH)₄ f3) ;
- 47,72 parties de quartz broyé i), commercialisé par la Société SIFRACO (Paris, France) sous la dénomination E600 ;
- 13,76 parties de mica de type muscovite d) ;
- 7,49 parties d'oxyde zinc e) ;
- 0,0029 parties de platine métal g), apporté sous la forme d'une solution dans le divinyltétraméthyldisiloxane d'un complexe du platine à 10 % en poids de platine ligandé par du divinyltétraméthyldisiloxane (complexe de Karstedt) ;
- 3,77 parties de TiO₂ de combustion h) ;
- 3,81 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
- 1,49 parties d'une huile d'huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
- 0,18 parties de gammaméthacryloxypropyltriméthoxysilane f4) ;
- 27,33 parties de silice de combustion traitée D4 (octaméthylcyclotétrasiloxane) b) de surface spécifique de 200 m²/g ;
- 17,25 parties de silice de combustion b) de surface spécifique de 150 m²/g.

Le mélange obtenu ci-avant est alors travaillé sur un malaxeur à 2 cylindres et on lui ajoute :
- 2,83 parties de péroxyde de 2,4-dichlorobenzoyle c).

### 2.2. Caractérisations de la composition :

On opère comme indiqué ci-avant au § 1.2.

Le tableau donné ci-après rassemble les résultats obtenus :

**TABLEAU**

| | Exemple comparatif | Exemple |
|---|---|---|
| Propriétés mécaniques NR | | |
| DSA | 71 | 68 |
| R/R (MPa) | 7,3 | 5,8 |
| A/R(%) | 188 | 267 |
| ME 100 (Mpa) | 4,2 | 3,4 |

| Propriétés mécaniques R | | |
|---|---|---|
| DSA | 75 | 73 |
| R/R (MPa) | 7 | 5,8 |
| A/R (%) | 135 | 150 |
| ME 100 (Mpa) | 5 | 4,2 |
| Densité NR | 1,41 | 1,61 |

| Cohésion des cendres sous | | |
|---|---|---|
| 500 volts (temps en minutes) | 79 | > 90 |

## Revendications

1. Compositions polyorganosiloxanes vulcanisables à chaud en élastomères silicones qui contiennent (toutes les parties sont données en poids) :
- 100 parties d'un ingrédient a) consistant dans au moins un polymère polyorganosiloxane,
- 5 à 80 parties d'un ingrédient b) consistant dans au moins une charge de renforcement,
- 0,2 à 8 parties d'un ingrédient c) consistant dans un pèroxyde organique,
- 8 à 30 parties d'un ingrédient d) consistant dans du mica,
- 6 à 20 parties d'un ingrédient e) consistant dans de l'oxyde de zinc,
- 0 à 15 parties d'un ingrédient f) consistant dans au moins un additif habituellement utilisé dans le domaine des compositions polyorganosiloxanes vulcanisables à chaud,
lesdites compositions étant **caractérisées en ce qu'**elles contiennent en plus, à titre d'autres ingrédients obligatoires :
- 0,0010 à 0,02 partie d'un ingrédient g) consistant dans du platine, un composé du platine et/ou un complexe du platine,
- 2 à 10 parties d'un ingrédient h) consistant dans de l'oxyde de titane, et
- 50 à 120 parties d'un ingrédient i) consistant dans au moins une charge de bourrage.

2. Compositions selon la revendication 1, **caractérisées en ce qu'**elles contiennent, sur la base de 100 parties en poids de polymère(s) polyorganosiloxane(s) a) :
- de 20 à 40 parties de charge(s) de renforcement b),
- de 1 à 6 parties de pèroxyde organique c),
- de 10 à 20 parties de mica d),
- de 7 à 12 parties d'oxyde de zinc e),
- de 4 à 12 parties d'additif(s) auxilliaire(s) f),
- de 0,0015 à 0,015 parties d'ingrédient g) exprimé en poids de platine métal (élémentaire) (soit 15 ppm à 150 ppm),
- de 3 à 6 parties d'oxyde de titane h), et
- de 80 à 110 parties de charge(s) de bourrage i).

3. Compositions selon les revendications 1 ou 2, **caractérisées en ce que** l'ingrédient a) consiste dans au moins un polymère polyorganosiloxane contenant de 0 à 4 % en poids de groupes vinyles et possédant une viscosité supérieure à 1 million de mPa.s à 25°C.

4. Compositions selon l'une quelconque des revendications 1 à 3, **caractérisées en ce que** l'ingrédient b) consiste dans la silice, l'alumine ou un mélange de ces deux espèces.

5. Compositions selon l'une quelconque des revendications 1 à 4, **caractérisées en ce que** l'ingrédient i) consiste dans au moins une silice cristalline.

6. Compositions selon l'une quelconque des revendications 1 à 5, **caractérisées en ce que** l'ingrédient facultatif f), quand on en utilise un, consiste dans : au moins un produit dit "antistructure" f1); et/ou au moins une résine polysiloxane f2); et/ou au moins un agent de stabilisation f3); et/ou au moins un agent de couplage f4); et/ou au moins un pigment coloré f5); et/ou au moins un composé à base de bore f6).

7. Utilisation d'une composition selon l'une quelconque des revendications 1 à 6 pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, puis à la faire réticuler en élastomère silicone par un chauffage procurant une température matière allant de 100°C à 200°C.

8. Fils ou câbles électriques protégés contre l'incendie fabriqués moyennant l'utilisation selon la revendication 7 d'une composition selon l'une quelconque des revendications 1 à 6.

9. Fils ou câbles électriques selon la revendication 8, **caractérisés en ce qu'**ils satisfont à la norme NFC 32-070 CR1 sous 500 volts avec un temps de fonctionnement allongé deplus de 30 % par rapport au seuil de 65 minutes requis par la norme.

## Patentansprüche

1. Polyorganosiloxanzusammensetzungen, die zu Siliconelastomeren heiß vulkanisierbar sind, die enthalten (alle Teile sind in Gewichtsteilen angegeben):
- 100 Teile eines Bestandteils a), der aus wenigstens einem Polyorganosiloxanpolymer besteht,
- 5 bis 80 Teile eines Bestandteils b), der aus wenigstens einem Verstärkungsfüllstoff besteht,
- 0,2 bis 8 Teile eines Bestandteils c), der aus einem organischen Peroxid besteht,
- 8 bis 30 Teile eines Bestandteils d), der aus Glimmer besteht,
- 6 bis 20 Teile eines Bestandteils e), der aus Zinkoxid besteht,
- 0 bis 15 Teile eines Bestandteils f), der aus wenigstens einem Zusatz besteht, der üblicherweise auf dem Gebiet der heiß vulkanisierbaren Polyorganosiloxanzusammensetzungen verwendet wird,
wobei besagte Zusammensetzungen **dadurch gekennzeichnet sind, dass** sie zusätzlich als weitere zwingende Bestandteile enthalten:
- 0,0010 bis 0,02 Teile eines Bestandteils g), der aus Platin, einer Platinverbindung und/oder einem Platinkomplex besteht,
- 2 bis 10 Teile eines Bestandteils h), der aus Titanoxid besteht, und
- 50 bis 120 Teile eines Bestandteils i), der aus wenigstens einem Füllstoff zum Auffüllen besteht.

2. Zusammensetzungen gemäß Anspruch 1, **dadurch gekennzeichnet, dass** sie auf der Basis von 100 Gewichtsteilen Polyorganosiloxanpolymer(en) a) enthalten:
- 20 bis 40 Teile Verstärkungsfüllstoff(e) b),
- 1 bis 6 Teile organisches Peroxid c),
- 10 bis 20 Teile Glimmer d),
- 7 bis 12 Teile Zinkoxid e),
- 4 bis 12 Teile Hilfszusatz(zusätze) f),
- 0,0015 bis 0,015 Teile Bestandteil g), ausgedrückt in Gewicht Platinmetall (elementar), (das heißt 15 ppm bis 150 ppm),
- 3 bis 6 Teile Titanoxid h) und
- 80 bis 110 Teile Füllstoff(e) zum Auffüllen i).

3. Zusammensetzungen gemäß den Ansprüchen 1 oder 2, **dadurch gekennzeichnet, dass** der Bestandteil a) aus wenigstens einem Polyorganosiloxanpolymer besteht, das 0 bis 4 Gew.-% Vinylgruppen enthält und eine Viskosität größer als 1 Million mPa·s bei 25 °C besitzt

4. Zusammensetzungen gemäß einem der Ansprüche 1 bis 3, **dadurch gekennzeichnet, dass** der Bestandteil b) aus Siliciumdioxid, Aluminiumoxid oder einem Gemisch dieser beiden Spezies besteht.

5. Zusammensetzungen gemäß einem der Ansprüche 1 bis 4, **dadurch gekennzeichnet, dass** der Bestandteil i) aus wenigstens einem kristallinen Siliciumdioxid besteht.

6. Zusammensetzungen gemäß einem der Ansprüche 1 bis 5, **dadurch gekennzeichnet, dass** der optionale Bestandteil f), wenn man ihn verwendet, besteht aus: wenigstens einem Produkt, das "Antistruktur"mittel genannt wird, f1); und/oder wenigstens einem Polysiloxanharz f2); und/oder wenigstens einem Stabilisierungsmittel f3); und/oder wenigstens einem Kopplungsmittel f4); und/oder wenigstens einem farbigen Pigment f5); und/oder wenigstens einer Verbindung auf der Basis von Bor f6).

7. Verwendung einer Zusammensetzung gemäß einem der Ansprüche 1 bis 6 für die Herstellung einer Ummantelung oder primären Isolierung von Einzelleiter(n), die in den Aufbau von elektrischen Drähten oder Kabeln, die gegen Brand geschützt sind, eingehen, die darin besteht, besagte Zusammensetzung um jeden Einzelleiter herum abzuscheiden, sie dann zu Siliconelastomer durch ein Erhitzen, das eine Materialtemperatur von 100 °C bis 200 °C liefert, vernetzen zu lassen.

8. Elektrische Drähte oder Kabel, die gegen Brand geschützt sind, die mittels der Verwendung gemäß Anspruch 7 einer Zusammensetzung gemäß einem der Ansprüche 1 bis 6 hergestellt sind.

9. Elektrische Drähte oder Kabel gemäß Anspruch 8, **dadurch gekennzeichnet, dass** sie der Norm NFC 32-070 CR1 unter 500 Volt mit einer um mehr als 30 % verlängerten Betriebszeit, bezogen auf den Schwellenwert von 65 Minuten, der von der Norm gefordert wird, genügen.

## Claims

1. Heat-curable polyorganosiloxane compositions made of silicone elastomers, which contain (all parts are given by weight):
- 100 parts of an ingredient a) consisting of at least one polyorganosiloxane polymer;
- 5 to 80 parts of an ingredient b) consisting of at least one reinforcing filler;
- 0.2 to 8 parts of an ingredient c) consisting of an organic peroxide;
- 8 to 30 parts of an ingredient d) consisting of mica;
- 6 to 20 parts of an ingredient e) consisting of zinc oxide;
- 0 to 15 parts of an ingredient f) consisting of at least one additive conventionally used in the field of heat-curable polyorganosiloxane compositions,
said compositions being **characterized in that** they contain, in addition, as other necessary ingredients:
- 0.0010 to 0.02 part of an ingredient g) consisting of platinum, a platinum compound and/or a platinum complex;
- 2 to 10 parts of an ingredient h) consisting of titanium oxide; and
- 50 to 120 parts of an ingredient i) consisting of at least one bulking filler.

2. Compositions according to claim 1, **characterized in that** they contain, on the basis of 100 parts by weight of polyorganosiloxane polymer(s) a):
- from 20 to 40 parts of reinforcing filler(s) b);
- from 1 to 6 parts of organic peroxide c);
- from 10 to 20 parts of mica d);
- from 7 to 12 parts of zinc oxide e);
- from 4 to 12 parts of auxiliary additive(s) f);
- from 0.0015 to 0.015 parts of ingredient g) expressed by weight of platinum metal (elemental platinum) (i.e. 15 ppm to 150 ppm),
- from 3 to 6 parts of titanium oxide h); and
- from 80 to 110 parts of bulking filler(s) i).

3. Compositions according to either of claims 1 and 2, **characterized in that** ingredient a) consists of at least one polyorganosiloxane polymer containing from 0 to 4% by weight of vinyl groups and possessing a viscosity of greater than 1 million mPa.s at 25°C.

4. Compositions according to any one of claims 1 to 3, **characterized in that** ingredient b) consists of silica, alumina or a mixture of these two species.

5. Compositions according to any one of claims 1 to 4, **characterized in that** ingredient i) consists of at least one crystalline silica.

6. Compositions according to any one of claims 1 to 5, **characterized in that** optional ingredient f), when one is used, consists of: at least one "antistructuring" product f1); and/or at least one polysiloxane resin f2); and/or at least one stabilizing agent f3); and/or at least one coupling agent f4); and/or at least one coloured pigment f5); and/or at least one boron-based compound f6).

7. Use of a composition according to any one of claims 1 to 6, for the production of the jacket or primary insulation of one or more single conductors used in the construction of fire-resistant electrical wires or cables, which consists in depositing said composition around each single conductor and then in making it crosslink into a silicone elastomer by heating to a material temperature ranging from 100°C to 200°C.

8. Fire-resistant electrical wires or cables manufactured by the use according to claim 7 of a composition according to any one of claims 1 to 6.

9. Electrical wires or cables according to claim 8, **characterized in that** they meet the NFC 32-070 CR1 standard at 500 volts with an operating time extended by more than 30% over the 65-minute threshold required by the standard.
